# EUROPÄISCHE PATENTSCHRIFT

(11) **EP 2 482 621 B1**
(45) Veröffentlichungstag und Bekanntmachung des Hinweises auf die Patenterteilung: **25.11.2015**
(21) Anmeldenummer: 12000158.1
(22) Anmeldetag: 12.01.2012
(51) Int. Cl.: H05B 37/02, F21V 23/04

(54) **Leuchte und Verfahren zur Steuerung einer solchen**
Light and method for controlling same
Lampe et procédé de commande de celle-ci

(30) Priorität: 14.01.2011 DE 102011008571
(43) Veröffentlichungstag der Anmeldung: 01.08.2012
(73) Patentinhaber: Eaton Safety IP GmbH & Co. KG, 12529 Schönefeld (DE)
(72) Erfinder: Prasuhn, Jürgen, 59494 Soest (DE)
(74) Vertreter: Grünecker Patent- und Rechtsanwälte PartG mbB

(56) Entgegenhaltungen:
- EP-A1- 0 723 384
- EP-A1- 0 903 966
- DE-A1- 10 230 313
- DE-A1-102007 047 141
- US-A- 4 894 601
- US-A1- 2004 218 379
- US-A1- 2010 259 931
- US-A1- 2010 327 766

## Beschreibung

Die Erfindung betrifft eine Rettungszeichenleuchte, mit zumindest einem Leuchtmittel und einem Steuer- und Überwachungsmodul, welches mit einer Versorgungsleitung mit Netzspannungsversorgung oder Notspannungsversorgung verbindbar ist.

Entsprechende Leuchten werden beispielsweise in betriebsmäßig verdunkelten Räumen wie Kinos, Theater oder dergleichen eingesetzt. Insbesondere bei Vorstellungen in diesen verdunkelten Räumen und wenn die Allgemeinbeleuchtung ausgeschaltet ist, weisen solche Leuchten eine reduzierte Helligkeit auf, um Besucher während der Vorstellung nicht zu blenden. Wird die Allgemeinbeleuchtung wieder eingeschaltet, muss auch die Helligkeit dieser Leuchten wieder erhöht werden, um beispielsweise einen Rettungsweg oder einen Notausgang zu kennzeichnen.

In der Regel weisen die Leuchten eine höhere Helligkeit bei Netzspannungsversorgung als bei Notspannungsversorgung auf.

Um die Helligkeit der Leuchten während einer Vorstellung zu reduzieren, werden beispielsweise Lichtmanagementsysteme für solche Leuchten verwendet, die allerdings zusätzliche Verdrahtungen und Datenkabel benötigen. Allerdings ist es auch bei einem solchen Lichtmanagementsystem schwierig, bei unterschiedlichen Umgebungslichtbedingungen entsprechende Steuerungen der Leuchten zu Dimmung oder zur Wiederherstellung der vollständigen Helligkeit vorzunehmen. Beispielsweise wird sich die Umgebungslichtbedingung je nach Tageszeit, eingeschalteter Allgemeinbeleuchtung oder auch eingeschalteter Allgemeinbeleuchtung mit einigen beschädigten Leuchten ändern.

DE 102 30 313 A1 beschreibt ein Schaltgerät zum Ein- und Ausschalten einer Wegeleuchte. In einer hellen Umgebung mit hoher Leuchtdichte wird die entsprechende Wegeleuchte mit einer hohen Leuchtdichte und in einer dunklen Umgebung mit reduzierter Leuchtdichte betrieben. Über einen entsprechenden Helligkeitssensor erfolgt ein Ein- und Ausschalten der Wegeleuchten in Abhängigkeit von der Umgebungshelligkeit.

EP 0903966 A1 beschreibt ein Beleuchtungssystem mit einem übergeordneten Steuergerät. Dieses veranlasst eine entsprechende Dimmung jeder Leuchte des Beleuchtungssystems, wozu entsprechende Dimminformationen von dem Steuergerät an Überwachungsadaptermodule der entsprechenden Leuchte übermittelt werden.

DE 10 2007 047 141 A1 betrifft ein Betriebsgerät zum Steuern des Einbrennvorgangs einer Lampe. Während des Einbrennvorgangs wird dazu ein Dimmlevel nicht unter ein vorbestimmtes Helligkeitsniveau abgesenkt. Auch bei dieser Druckschrift wird ein zentrales Steuergerät beschrieben, das ggf. für alle Leuchten Helligkeitswerte und damit entsprechende Dimmlevel vorgibt.

EP 0 723 384 A1 zeigt eine Schaltungsanordnung zum programmgesteuerten Überwachen einer Sicherheitsbeleuchtungsanlage. Im Falle einer Netzstörung wird durch eine Helligkeitssensor ein Unterschreiten eines entsprechenden Beleuchtungswertes erkannt und es erfolgt ein Umschalten der Leuchten auf Batteriebetrieb.

US 2004/0218379 A1 beschreibt eine Sicherheitsbeleuchtungsanlage, bei der durch einen Umgebungslichtsensor bei Netzausfall ein Endladestrom einer Batterie reduziert werden soll. Außerdem erfolgt durch den Umgebungslichtsensor ggf. ein Umschalten auf eine Nachtbeleuchtungsfunktion.

US 2010/0327766 A1 beschreibt eine Fernsteuerung mittels einer Fernsteuerungseinheit, die bei Netzausfall dazu verwendet wird, eine Lichtquelle gespeist aus einer Batterie einzusetzen.

US 2010/0259931 A1 beschreibt ein Lichtmodul, wobei integrierte Sensoren die Erfassung von Bewegungen erlauben.

Der Erfindung liegt die Aufgabe zugrunde, entsprechende Leuchten auch bei sich verändernden Umgebungslichtbedingungen in einfacher Weise und ohne großen schaltungstechnischen Aufwand entsprechend in Ihrer Helligkeit zu beeinflussen.

Diese Aufgabe wird erfindungsgemäß durch die Merkmale der Ansprüche 1 bzw. 12 gelöst.

Dazu ist der Rettungszeichenleuchte ein Umgebungslichtsensor oder Helligkeitssensor zugeordnet. Dieser erfasst das Umgebungslicht, dass beispielsweise durch die Allgemeinbeleuchtung oder andere Lichtquellen und auch abhängig von der Tageszeit beeinflusst wird. Entsprechend zu Signalen von diesem Umgebungslichtsensor kann dann eine Helligkeit des Leuchtmittels der jeweiligen Leuchte beeinflusst werden.

Dabei erfolgt in der Regel ein Messen der Helligkeit von einfallendem Licht mittels des Umgebungslichtsensors. Die gemessene Helligkeit wird in Daten umgesetzt und diese an ein Steuer- und Überwachungsmodul der Leuchte übermittelt. Dieses wird dann adaptiv das entsprechende Leuchtmittel jeweils in Abhängigkeit von der gemessenen Helligkeit zu Erhöhung oder Verminderung der Strahlungsleistung des Leuchtmittels steuern.

Der entsprechende Umgebungslichtsensor ist zwar der jeweiligen Rettungszeichenleuchte zugeordnet, muss allerdings nicht Teil der Leuchte sein, sondern kann auch in einem gewissen Abstand zu dieser angeordnet sein. Die Übermittlung der entsprechenden Daten kann über Funk erfolgen, wenn der Umgebungslichtsensor beispielsweise drahtlos mit der Rettungszeichenleuchte kommuniziert. Es besteht allerdings auch die Möglichkeit, dass der Umgebungslichtsensor über eine Verbindungsleitung mit dem Steuer- und Überwachungsmodul verbunden ist. In diesem Zusammenhang besteht weiterhin die Möglichkeit, dass dieser Umgebungslichtsensor direkt an passender Stelle eines Gehäuses der Rettungszeichenleuchte oder direkt neben der Rettungszeichenleuchte angeordnet ist.

Das entsprechende Steuer- und Überwachungsmodul kann weitere Einrichtungen aufweisen, wie beispielsweise eine Einstelleinrichtung für eine Adresse, eine Einstelleinrichtung für ein Dimmlevel und dergleichen. Über die entsprechende Adresse ist die Leuchte von einer zentralen Einrichtung oder einem Zentral- oder Gruppenbatteriesystem ansprechbar und überwachbar.

Das einstellbare Dimmlevel beträgt beispielsweise 30% bei Netzspannungsversorgung und 100% bei Notspannungsversorgung. Weiterhin kann ein entsprechendes Dimmlevel von 30% auch bei ausgeschalteter Allgemeinbeleuchtung im Falle einer Vorstellung im Kino, Theater oder dergleichen betragen.

Andere Dimmlevel sind ebenso möglich.

Das Steuer- und Überwachungsmodul kann je nach Leuchtmittel unterschiedlich ausgebildet sein und beispielsweise ein elektronischer Konverter, ein Netzgerät, eine Steuereinheit, eine elektronisches Vorschaltgerät oder dergleichen sein.

Neben einer Einstelleinrichtung für ein Dimmlevel weist das Steuer- und Überwachungsmodul weiterhin eine Dimmsteuerung auf, die, auch adaptiv, je nach vom Umgebungslichtsensor erfasster Helligkeit die Dimmung weiter verändert.

Es besteht ebenfalls die Möglichkeit, dass das Steuer- und Überwachungsmodul eine Datenkommunikationsschnittstelle aufweist, um beispielsweise Daten von einem Lichtmanagementsystem, einer zentralen Steuereinheit, oder einem Zentral- bzw. Gruppenbatteriesystem zu erhalten. Die Datenkommunikation kann in diesem Zusammenhang in beide Richtungen erfolgen, d. h. auch vom Steuer- und Überwachungsmodul zu der entsprechenden externen Einrichtung.

Mittels der Datenkommunikation ist beispielsweise ein Funktions- oder Betriebsdauertest, eine Inspektion, Wartung, Betriebsartänderung, Instandhaltung oder dergleichen durchführbar.

Bei großer Helligkeit der Allgemeinbeleuchtung wird entsprechend auch die Helligkeit der Rettungszeichenleuchte relativ hoch sein, um eine ausreichende Helligkeit entsprechenden Normen oder nationalen Anforderungen an eine Notbeleuchtung zu genügen. Dieses Helligkeitsniveau kann als Basisniveau bezeichnet werden, dass beispielsweise durch ein Potentiometer, einen Drehschalter, per Softwarekonfiguration oder der gleichen direkt am Steuer- und Überwachungsmodul einstellbar ist. Relativ zu diesem Basisniveau wird dann die Dimmung mittels Dimmsteuerung und gegebenenfalls einer Ausgangsleistungssteuerung des Steuer- und Überwachungsmoduls zur Versorgung des Leuchtmittels erfolgen. Durch das entsprechende Dimmen in an das Umgebungslicht angepasster Weise wird die Lichtintensität des entsprechenden Leuchtmittels reduziert, sodass insgesamt weniger Leistung verbraucht wird, sich eine längere Lebensdauer des Leuchtmittels ergibt und insgesamt eine automatische lokale Lichtsteuerung bei jeder Leuchte erfolgen kann. Es besteht erfindungsgemäß kein Bedarf für zusätzliche Lichtmanagementsteuergeräte, Datenkabel oder andere Verdrahtungen.

Direkt von der Rettungszeichenleuchte wird der Beginn des Dimmens bzw. dessen Beendigung beeinflusst, indem beispielsweise eine Verzögerungszeit zum Beginnen des Dimmens, eine Geschwindigkeit des Dimmens oder dergleichen einstellbar ist. Solche Einstellung kann über Software direkt an der Rettungszeichenleuchte oder auch von außen über beispielsweise eine zentrale Steuerung erfolgen. Solche Einstellungen können einmal und dann auf Dauer erfolgen oder auch je nach Erfordernis neu vorgenommen werden.

Dies gilt auch für eine Dimmadaptionszeit nach Ein- oder Ausschalten der Allgemeinbeleuchtung. Eine solche Dimmadaptionszeit bestimmt beispielsweise, zu welchem Zeitpunkt nach ein- oder ausschalten der Allgemeinbeleuchtung ein vorgegebenes Dimmniveau erreicht wird und ab welchem Zeitpunkt nach dem ein- oder ausschalten die Dimmung initiiert wird.

Es besteht weiterhin die Möglichkeit, dass das Steuer- und Überwachungsmodul eine Schnittstelle zur Verbindung mit einem Lichtmanagementsystem aufweist, um zusätzliche Beeinflussungen oder Steuerungen zu ermöglichen. Über diese Schnittstelle sind spezielle Datensätze mit Dimminformation übertragbar, die die Dimmsteuerung des Steuer- und Überwachungsmoduls beeinflussen können.

Weiterhin kann durch das Lichtmanagementsystem beispielsweise jede Rettungszeichenleuchte ein- und ausgeschaltet werden, um einen Funktionstest mit Hilfe des Umgebungslichtsensors durchzuführen. Beim Ein- und Ausschalten der Rettungszeichenleuchte wird der Umgebungslichtsensor unterschiedliche Lichtlevel messen, sodass aufgrund dieser und ggf. aufgrund der Differenz dieser Lichtlevel die Funktionstüchtigkeit der Leuchte überprüfbar ist.

Mit Hilfe des Lichtmanagementsystems besteht außerdem die Möglichkeit, entsprechende Informationen vom Umgebungslichtsensor zu überschreiben, so dass dieser für die Dimmung des Leuchtmittels außer Funktion gesetzt wird, fall beispielsweise kritische Situationen auftreten, die eine zentrale Steuerung aller Leuchten erfordern.

Um alle notwendigen Funktionen mittels des Steuer- und Überwachungsmoduls durchführen zu können, kann dieses einen Mikrokontroller aufweisen.

Ein mögliches Leuchtmittel für die Rettungszeichenleuchte ist beispielsweise eine LED, wobei allerdings auch andere Leuchtmittel verwendbar sind, wie Glühlampen, Nieder- oder Hochdruckhalogenlampen, Leuchtstoffröhren oder dergleichen.

Eine entsprechende Rettungszeichenleuchte kann auch als Einzelbatterieleuchte ausgebildet sein. Eine solche Einzelbatterieleuchte weißt eine Ersatzstromquelle in der Rettungszeichenleuchte auf. Die Einzelbatterieleuchte kann über eine Kommunikationseinrichtung zentral überwacht und gesteuert werden. Die Kommunikationseinrichtung kann eine Datenleitung umfassen, kann aber auch drahtlos arbeiten.

Durch den Umgebungslichtsensor und die gemessene Helligkeit ergibt sich weiterhin die Möglichkeit, unterschiedliche Lichtszenarien festzustellen oder festzulegen. Dies betrifft beispielsweise eine Anpassung der Dimmung an die natürliche Beleuchtung entsprechend zur Tageszeit, eine Anpassung der Dimmung an die ein- oder ausgeschaltete Allgemeinbeleuchtung oder auch eine Anpassung an eine solche Allgemeinbeleuchtung, bei der allerdings einige Leuchtmittel ausgefallen sind.

Alle diese Lichtszenarien sind in eine entsprechende Dimmung der Rettungszeichenleuchte umsetzbar.

Das Steuer- und Überwachungsmodul kann weitere Aufgaben übernehmen, wie beispielsweise einen Kurzschlussschutz, einen Überlast- oder Temperaturschutz und dergleichen.

Das oben genannte Lichtmanagementsystem kann beispielsweise ein DALI-System oder auch ein anderes Lichtmanagementsystem sein.

Erfindungsgemäß ergibt sich eine einfache Adaption zwischen solchen Leuchten und der Allgemeinbeleuchtung ohne Bedarf für eine separate Steuerung, ein Datenkabel oder andere externe Lichtmanagementlösungen. Diese sind für die adaptive Dimmung der Leuchten nicht erforderlich, können allerdings weiter Funktionalitäten bereit stellen, siehe die obigen Ausführungen.

Im Folgenden wird die Erfindung anhand der in Figur beigefügten Zeichnungen näher beschrieben und erläutert.

Es zeigt:

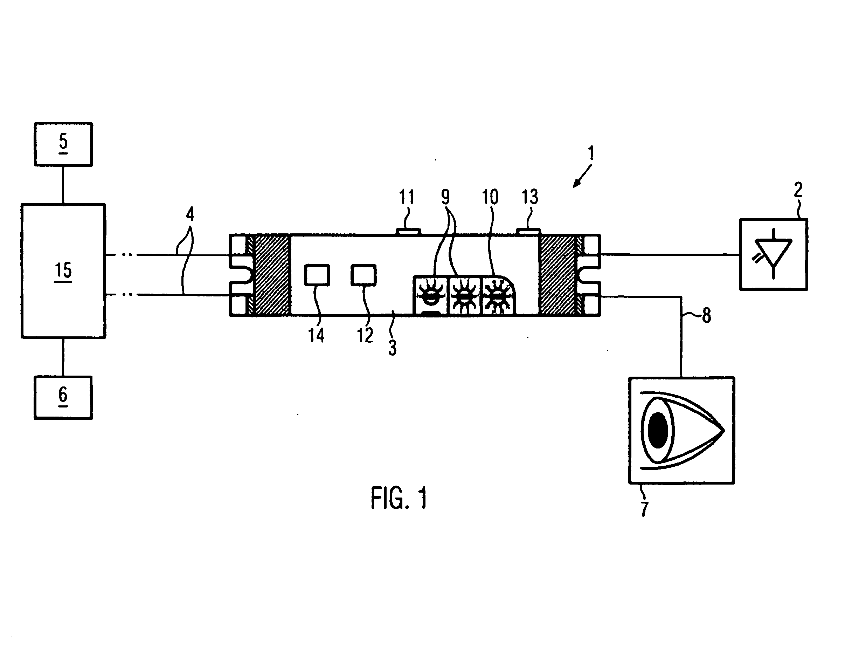

Figur 1 eine Prinzipdarstellung einer Schaltung mit einer erfindungsgemäßer Rettungszeichenleuchte 1.
Nach Figur 1 weist eine Rettungszeichenleuchte 1 zumindest ein Leuchtmittel 2 und ein Steuer- und Überwachungsmodul 3 auf. Das Leuchtmittel 2 ist/sind beispielsweise eine/mehrere LED. Andere Leuchtmittel sind einsetzbar, wie Glühlampen, Leuchtstoffröhren, Nieder- und Hochdruckhalogenlampen oder dergleichen.

Ein Leuchtengehäuse, in dem das Steuer- und Überwachungsmodul 3 und das Leuchtmittel 2 angeordnet sein können, ist in Figur 1 nicht dargestellt.

Die Leuchte 1 weist weiterhin einen Umgebungslichtsensor 7 zur Erfassung der Umgebungshelligkeit auf. Der Umgebungslichtsensor 7 kann drahtlos mit dem Steuer- und Überwachungsmodul 3 oder auch mittels einer Verbindungsleitung 8 verbunden sein. Ein solcher Umgebungslichtsensor 7 kann in oder an dem entsprechenden Leuchtengehäuse oder auch im bestimmten Abstand zu diesem angeordnet sein.

Das Steuer- und Überwachungsmodul 3 weist eine Reihe von internen Einrichtungen auf, wie beispielsweise einen Mikrokontroller 14 oder eine Ausgangsleistungsteuereinheit 12. Mittels dieser ist die Ausgangsleistung einstellbar, die an das wenigstens eine Leuchtmittel 2 abgegeben wird. Weiterhin weist das Steuer- und Überwachungsmodul 3 Einstelleinrichtungen 9 für eine Adresse und zur Dimmung siehe Dimmsteuerung 10 auf. Mittels der Einstelleinrichtung 9 für die Adresse, kann der Leuchte 1 eine spezifische Adresse vor Ort zugeordnet werden, über die die Leuchte von einer zentralen Steuereinrichtung oder auch von einem Zentral-/Gruppenbatteriesystem 15 ansprechbar ist.

Weiterhin weist das Steuer- und Überwachungsmodul 3 eine Datenkommunikationsschnittstelle 11 und eine weitere Schnittstelle 13 auf. Über die Datenkommunikationsschnittstelle 11 kann beispielsweise eine Übermittlung von Daten über eine separate Datenleitung erfolgen. Die weitere Schnittstelle 13 kann zum Anschluss eines Lichtmanagementsystems beispielsweise auf der Grundlage von DALI dienen.

Die Leuchte 1 ist über entsprechende Versorgungsleitungen 4 mit dem Zentral-/Gruppenbatteriesystem und über dieses mit entsprechend einer Netzspannungsversorgung 5 bzw. Notspannungsversorgung 6 verbunden. In dem Zentral-/Gruppenbatteriesystem 15 ist eine Umschalteinrichtung angeordnet, die bei Ausfall der Netzspannungsversorgung 5 ein Umschalten auf die Notspannungsversorgung 6 vornimmt. Netzspannungsversorgung und Notspannungsversorgung können Wechselspannung sein, wobei aber zumindest die Netzspannungsversorgung eine Wechselspannung ist. Die Notspannung oder auch Ersatzspannung kann ebenfalls eine Wechselspannung sein, wobei im Notbetrieb je nach Anwendungsfall eine solche Wechselspannung oder auch Gleichspannung vorliegen kann. Eine Gleichspannung ergibt sich beispielsweise bei einer Batterie oder dergleichen als Notspannungsversorgung, wobei allerdings auch ein Generator oder dergleichen zur Erzeugung einer Wechselspannung für diese Notspannungsversorgung verwendet werden kann.

Mittels des Umgebungslichtsensors 7 wird die Helligkeit des Umgebungslichts der Leuchte 1 gemessen und zur Adaption des Dimmens des entsprechenden Leuchtmittels 2 verwendet. Dazu werden entsprechende Messdaten vom Umgebungslichtsensor 7 über die Verbindungsleitung 8 an das Steuer- und Überwachungsmodul 3 übermittelt. Ist beispielsweise ein Ausschalten der Allgemeinbeleuchtung durch den Umgebungslichtsensor 7 erfasst, so kann entsprechend auf 30% gedimmt werden, während bei eingeschalteter Allgemeinbeleuchtung keine Dimmung stattfindet, sondern das Leuchtmittel mit voreingestellter Maximalleistung versorgt wird, um im Vergleich zur Allgemeinbeleuchtung ausreichend hell zu sein.

Das Dimmniveau ist über die Dimmsteuerung 10 einstellbar, wodurch entsprechend die Ausgangsleistung mittels der Ausgangsleistungssteuereinrichtung 12 beeinflusst wird.

Das Steuer- und Überwachungsmodul 3 kann beispielsweise ein elektronischer Konverter, eine Steuereinheit, eine Netzgerät oder ein elektronisches Vorschaltgerät sein.

Der Umgebungslichtsensor 7 kann ebenfalls während eines Funktionstests verwendet werden, bei dem beispielsweise das Leuchtmittel 2 ein- und ausgeschaltet wird. Diese unterschiedlichen Lichtlevel werden von dem Umgebungslichtsensor 7 erfasst und falls eine entsprechende und ausreichende Differenz der Lichtlevel vorliegt, wird das Leuchtmittel als funktionierend erkannt. Ein solcher Funktionstest kann von dem Steuer- und Überwachungsmodul 3 aufgrund einer entsprechenden Steuerung durch eine externe Einheit beispielsweise des Lichtmanagementsystems, einer zentralen Überwachungseinheit, oder auch der Zentral-/Gruppenbatteriesystems 15 durchgeführt werden.

Mittels des Umgebungslichtsensors sind weiterhin unterschiedliche Lichtszenarien erkennbar, wie beispielsweise unterschiedliches Umgebungslicht entsprechend zur Tageszeit, eingeschaltete Allgemeinbeleuchtung, gedimmte Allgemeinbeleuchtung oder auch eine Allgemeinbeleuchtung mit Ausfall einiger Leuchtmittel. Bei allen diesen Lichtszenarien ist es erfindungsgemäß jeweils möglich, eine entsprechende Dimmung adaptiv durchzuführen. Dies erfolgt insbesondere ohne weitere äußere Beeinflussung der Leuchte über eine Datenkommunikation mittels eines Datenkabels oder dergleichen.

## Patentansprüche

1. Rettungszeichenleuchte (1), mit zumindest einem Leuchtmittel (2) und einem Steuer- und Überwachungsmodul (3), welches über eine Versorgungsleitung (4) mit Netzspannungsversorgung (5) oder Notspannungsversorgung (6) verbunden ist, wobei der Leuchte (1) ein mit dem Steuer- und Überwachungsmodul verbundener Umgebungslichtsensor (7) zugeordnet ist, wobei das Steuer- und Überwachungsmodul (3) eine Dimmsteuerung (10) zum Dimmen des zumindest einen Leuchtmittels (2) aufweist, und wobei von dem Umgebungslichtsensor (7) Signale in Abhängigkeit von einer gemessenen Helligkeit an das Steuer- und Überwachungsmodul (3) zur adaptiven Steuerung des Leuchtmittels (2) der Leuchte (1) zur automatisch lokalen Lichtsteuerung der Leuchte übermittelbar sind,
**dadurch gekennzeichnet, dass**
mittels des Steuer- und Überwachungsmoduls (3) eine Verzögerungszeit und/oder eine Geschwindigkeit des Dimmens einstellbar ist und eine Dimmadaptionszeit für das Leuchtmittel (2) nach Ein- oder Ausschalten der Allgemeinbeleuchtung vorgebbar ist.

2. Rettungszeichenleuchte nach Anspruch 1, **dadurch gekennzeichnet, dass** der Umgebungslichtsensor (7) über eine Verbindungsleitung (8) mit dem Steuer- und Überwachungsmodul (3) verbindbar ist.

3. Rettungszeichenleuchte nach Anspruch 1 oder 2, **dadurch gekennzeichnet, dass** das Steuer- und Überwachungsmodul (3) ferner eine Einstelleinrichtung (9) für Adressen und/ oder Dimmlevel aufweist.

4. Rettungszeichenleuchte nach einem der vorangehenden Ansprüche, **dadurch gekennzeichnet, dass** das Steuer- und Überwachungsmodul (3) ein elektronischer Konverter, ein Netzgerät, eine Steuereinheit oder ein Vorschaltgerät ist.

5. Rettungszeichenleuchte nach einem der vorangehenden Ansprüche, **dadurch gekennzeichnet, dass** das Steuer- und Überwachungsmodul (3) ferner eine Datenkommunikationsschnittstelle (11) aufweist.

6. Rettungszeichenleuchte nach einem der vorangehenden Ansprüche, **dadurch gekennzeichnet, dass** das Steuer- und Überwachungsmodul (3) ferner eine Ausgangsleistungssteuerung (12) zur Versorgung des Leuchtmittels (2) aufweist.

7. Rettungszeichenleuchte nach einem der vorangehenden Ansprüche, **dadurch gekennzeichnet, dass** das Steuer- und Überwachungsmodul (3) ferner eine Schnittstelle (13) zur Verbindung mit einem Lichtmanagementsystem aufweist.

8. Rettungszeichenleuchte nach einem der vorangehenden Ansprüche, **dadurch gekennzeichnet, dass** das Steuer- und Überwachungsmodul (3) ferner einen Mikrokontroller (14) aufweist.

9. Rettungszeichenleuchte nach einem der vorangehenden Ansprüche, **dadurch gekennzeichnet, dass** das Leuchtmittel (2) eine LED ist.

10. Rettungszeichenleuchte nach einem der vorangehenden Ansprüche, **dadurch gekennzeichnet, dass** das Steuer- und Überwachungsmodul (3) mit einem Zentral- oder Gruppenbatteriesystem (15) verbindbar ist.

11. Rettungszeichenleuchte nach einem der vorangehenden Ansprüche, **dadurch gekennzeichnet, dass** die Leuchte eine Einzelbatterieleuchte ist, welche insbesondere mittels einer Kommunikationseinrichtung zentral überwach- und steuerbar ist.

12. Verfahren zur Steuerung einer Rettungszeichenleuchte (1), welche zumindest ein Leuchtmittel (2) und ein Steuer- und Überwachungsmodul (3), welches über eine Versorgungsleitung (4) mit Netzspannungsversorgung (5) oder Notspannungsversorgung (6) verbunden ist, aufweist, wobei das Steuer- und Überwachungsmodul (3) eine Dimmsteuerung (10) zum Dimmen des zumindest einen Leuchtmittels (2) aufweist, wobei das Verfahren die folgenden Schritte aufweist:
i) Messen der Helligkeit von einfallendem Licht mittels eines Umgebungslichtsensors (7);
ii) Übermitteln entsprechender Daten der Helligkeitsmessung an das Steuer- und Überwachungsmodul (3);
iii) Adaptives Steuern des Leuchtmittels (2) **durch** das Steuer- und Überwachungsmodul (3) in Abhängigkeit von der gemessenen Helligkeit zum Erhöhen oder Vermindern der Strahlungsleistung des Leuchtmittels (2) zur automatischen Lichtsteuerung der Rettungszeichenleuchte (1);
**gekennzeichnet durch die folgenden Schritte:**
iv) Einstellen einer Verzögerungszeit und/oder Geschwindigkeit des Dimmens mittels des Steuer- und Überwachungsmoduls (3), und
v) Vorgeben einer Dimmadaptionszeit für das Leuchtmittel (2) nach Ein- oder Ausschalten der Allgemeinbeleuchtung.

13. Verfahren nach Anspruch 12, **gekennzeichnet durch** ein Erhöhen oder Vermindern der Strahlungsleistung auf ein Niveau, bei dem das Leuchtmittel relativ zum Umgebungslicht sichtbar ist.

14. Verfahren nach Anspruch 12 oder 13, **gekennzeichnet durch** ein Erhöhen der Strahlungsleistung beim Einstellen des Leuchtmittels auf ein maximales Niveau und anschließendes Vermindern der Strahlungsleistung entsprechend zum Umgebungslicht.

15. Verfahren nach einem der Ansprüche 12 bis 14, **gekennzeichnet durch** Einstellen eines Dimmniveaus am Steuer- und Überwachungsmodul (3) bei Notspannungsversorgung (6).

16. Verfahren nach einem der Ansprüche 12 bis 15, **gekennzeichnet durch** Einstellen eines Strahlungsleistungsbasiswertes an der Rettungszeichenleuchte (1).

17. Verfahren nach einem der vorangehenden Ansprüche 12 bis 16, **gekennzeichnet durch** Durchführen eines Funktionstestes der Rettungszeichenleuchte (1) mittels Messung der Helligkeiten bei ein- und ausgeschalteter Rettungszeichenleuchte (1).

18. Verfahren nach einem der vorangehenden Ansprüche 12 bis 17, **gekennzeichnet durch** Empfangen von Dimmdaten von einer zentralen Steuerung oder einem Zentral-oder Gruppenbatteriesystem.

19. Verfahren nach einem der vorangehenden Ansprüche 12 bis 18, **gekennzeichnet durch** Auswerten der gemessenen Helligkeit zum Feststellen oder Festlegen unterschiedlicher Lichtszenarien.

20. Verfahren nach einem der vorangehenden Ansprüche 12 bis 19, **gekennzeichnet durch** Überschreiben von Daten des Umgebungslichtsensors (7) zur Steuerung der Rettungszeichenleuchte (1) in Notsituationen.

## Claims

1. An emergency luminaire (1) comprising at least one illuminant (2) and at least one control and monitoring module (3) connected via a power supply line (4) to a mains voltage power supply (5) or an emergency voltage power supply (6), the luminaire (1) having associated therewith an ambient light sensor (7) connected to the control and monitoring module, wherein the control and monitoring module (3) includes a dimming control unit (10) for dimming the at least one illuminant (2), and wherein the ambient light sensor (7) is adapted to transmit, depending on a measured brightness, signals to the control and monitoring module (3) for adaptively controlling the illuminant (2) of the luminaire (1) for an automatic local light control of the luminaire,
**characterized in that**
a delay time and/or a velocity of dimming can be adjusted by means of the control and monitoring module (3), and that a dimming adaptation time for the illuminant (2) after activation or deactivation of the general lighting can be predetermined.

2. The emergency luminaire according to claim 1, **characterized in that** the ambient light sensor (7) is connectable to the control and monitoring module (3) via a connecting cable (8).

3. The emergency luminaire according to claim 1 or 2, **characterized in that** the control and monitoring module (3) additionally comprises an adjustment unit (9) for addresses and/or the dimming level.

4. The emergency luminaire according to one of the preceding claims, **characterized in that** the control and monitoring module (3) is an electronic converter, a mains unit, a control unit or a ballast.

5. The emergency luminaire according to one of the preceding claims, **characterized in that** the control and monitoring module (3) additionally includes a data communication interface (11).

6. The emergency luminaire according to one of the preceding claims, **characterized in that** the control and monitoring module (3) additionally includes an output power control unit (12) for supplying the illuminant (2).

7. The emergency luminaire according to one of the preceding claims, **characterized in that** the control and monitoring module (3) additionally includes an interface (13) for connection to a light management system.

8. The emergency luminaire according to one of the preceding claims, **characterized in that** the control and monitoring module (3) additionally includes a microcontroller (14).

9. The emergency luminaire according to one of the preceding claims, **characterized in that** the illuminant (2) is an LED.

10. The emergency luminaire according to one of the preceding claims, **characterized in that** the control and monitoring module (3) is connectable to a central or group battery system (15).

11. The emergency luminaire according to one of the preceding claims, **characterized in that** the luminaire is a single-battery luminaire, which is adapted to be centrally monitored and controlled in particular by means of a communication unit.

12. A method of controlling an emergency luminaire (1) comprising at least one illuminant (2) and at least one control and monitoring module (3) connected via a power supply line (4) to a mains voltage power supply (5) or an emergency voltage power supply (6), wherein the control and monitoring module (3) includes a dimming control unit (10) for dimming the at least one illuminant (2), said method comprising the following steps:
i) measuring the brightness of incident light by means of an ambient light sensor (7);
ii) transmitting the data resulting from said brightness measurement to the control and monitoring module (3);
iii) adaptively controlling the illuminant (2) through the control and monitoring module (3) depending on the measured brightness for increasing or reducing the illumination power of the illuminant (2) for automatic light control of the emergency luminaire (1);
**characterized by the following steps:**
iv) adjusting a delay time and/or velocity of dimming by means of the control and monitoring module (3), and
v) predetermining a dimming adaptation time for the illuminant (2) after activation or deactivation of the general lighting.

13. The method according to claim 12, **characterized by** increasing or reducing the illumination power to a level at which the illuminant is visible relative to the ambient light.

14. The method according to claim 12 or 13, **characterized by** increasing the illumination power upon adjusting the illuminant to a maximum level and by subsequently reducing the illumination power in accordance with the ambient light.

15. The method according to one of the claims 12 to 14, **characterized by** adjusting a dimming level on the control and monitoring module (3) in the case of emergency voltage power supply (6).

16. The method according to one of the claims 12 to 15, **characterized by** adjusting an illumination power basic value on the emergency luminaire (1).

17. The method according to one of the preceding claims 12 to 16, **characterized by** carrying out a function test of the emergency luminaire (1) by measuring the brightness in the activated and deactivated condition of the emergency luminaire (1).

18. The method according to one of the preceding claims 12 to 17, **characterized by** receiving dimming data from a central control unit or a central or group battery system.

19. The method according to one of the preceding claims 12 to 18, **characterized by** evaluating the measured brightness for detecting or determining different light scenarios.

20. The method according to one of the preceding claims 12 to 19, **characterized by** overwriting the data of the ambient light sensor (7) for controlling the emergency luminaire (1) in emergency situations.

## Revendications

1. Luminaire à pictogrammes de secours ou luminaire d'indications de secours (1), comprenant au moins un moyen d'éclairage (2) et un module de commande et de surveillance (3), qui est relié, par l'intermédiaire d'une ligne d'alimentation (4), à une alimentation de tension de réseau (5) ou à une alimentation de tension de secours (6), luminaire
dans lequel un capteur de lumière environnante ou ambiante (7), relié au module de commande et de surveillance, est associé au luminaire (1),
dans lequel le module de commande et de surveillance (3) comporte une commande d'atténuation (10) pour produire une atténuation de luminosité dudit au moins un moyen d'éclairage (2), et
dans lequel des signaux peuvent être transmis par le capteur de lumière ambiante (7), en fonction d'une luminosité mesurée, au module de commande et de surveillance (3) pour la commande adaptative du moyen d'éclairage (2) du luminaire (1) en vue de la commande locale automatique d'éclairage du luminaire, **caractérisé**
**en ce qu'**au moyen du module de commande et de surveillance (3), il est possible de régler un temps de temporisation et/ou une vitesse de l'atténuation, et il est possible de prescrire un temps d'adaptation de l'atténuation pour le moyen d'éclairage (2) après la mise en marche ou à l'arrêt de l'éclairage général.

2. Luminaire d'indications de secours selon la revendication 1, **caractérisé en ce que** le capteur de lumière ambiante (7) peut être relié, par l'intermédiaire d'une ligne de liaison (8), au module de commande et de surveillance (3).

3. Luminaire d'indications de secours selon la revendication 1 ou la revendication 2, **caractérisé en ce que** le module de commande et de surveillance (3) comprend, par ailleurs, un dispositif de réglage (9) pour des adresses et/ou des niveaux d'atténuation.

4. Luminaire d'indications de secours selon l'une des revendications précédentes, **caractérisé en ce que** le module de commande et de surveillance (3) est un convertisseur électronique, un bloc d'alimentation réseau, une unité de commande ou un régulateur de puissance ou ballast.

5. Luminaire d'indications de secours selon l'une des revendications précédentes, **caractérisé en ce que** le module de commande et de surveillance (3) comprend, par ailleurs, une interface de communication de données (11).

6. Luminaire d'indications de secours selon l'une des revendications précédentes, **caractérisé en ce que** le module de commande et de surveillance (3) comprend, par ailleurs, une commande de puissance de sortie (12) pour l'alimentation du moyen d'éclairage (2).

7. Luminaire d'indications de secours selon l'une des revendications précédentes, **caractérisé en ce que** le module de commande et de surveillance (3) comprend, par ailleurs, une interface (13) pour assurer une liaison avec un système de gestion d'éclairage.

8. Luminaire d'indications de secours selon l'une des revendications précédentes, **caractérisé en ce que** le module de commande et de surveillance (3) comprend, par ailleurs, un microcontrôleur (14).

9. Luminaire d'indications de secours selon l'une des revendications précédentes, **caractérisé en ce que** le moyen d'éclairage (2) est une diode électroluminescente ou LED.

10. Luminaire d'indications de secours selon l'une des revendications précédentes, **caractérisé en ce que** le module de commande et de surveillance (3) peut être relié à un système de batterie centralisé ou groupé (15).

11. Luminaire d'indications de secours selon l'une des revendications précédentes, **caractérisé en ce que** le luminaire est un luminaire à batterie individuelle, qui peut notamment être commandé et contrôlé ou surveillé de manière centralisée, par l'intermédiaire d'un système de communication.

12. Procédé de commande d'un luminaire à pictogrammes de secours ou luminaire d'indications de secours (1), comprenant au moins un moyen d'éclairage (2) et un module de commande et de surveillance (3), qui est relié, par l'intermédiaire d'une ligne d'alimentation (4), à une alimentation de tension de réseau (5) ou à une alimentation de tension de secours (6), le module de commande et de surveillance (3) comportant une commande d'atténuation (10) pour produire une atténuation de luminosité dudit au moins un moyen d'éclairage (2), le procédé comprenant les étapes suivantes :
i) mesure de la luminosité de la lumière incidente au moyen d'un capteur de lumière ambiante (7) ;
ii) transmission de données correspondantes de la mesure de luminosité, au module de commande et de surveillance (3) ;
iii) commande adaptative du moyen d'éclairage (2) par le module de commande et de surveillance (3) en fonction de la luminosité mesurée, pour augmenter ou diminuer la puissance de rayonnement du moyen d'éclairage (2) en vue de la commande automatique d'éclairage du luminaire d'indications de secours (1) ;
**caractérisé par les étapes suivantes :**
iv) réglage d'un temps de temporisation et/ou d'une vitesse de l'atténuation au moyen du module de commande et de surveillance (3), et
v) prescription d'un temps d'adaptation de l'atténuation pour le moyen d'éclairage (2) après la mise en marche ou à l'arrêt de l'éclairage général.

13. Procédé selon la revendication 12, **caractérisé par** une augmentation ou une diminution de la puissance de rayonnement à un niveau pour lequel le moyen d'éclairage est visible par rapport à la lumière ambiante.

14. Procédé selon la revendication 12 ou la revendication 13, **caractérisé par** une augmentation de la puissance de rayonnement lors du réglage du moyen d'éclairage à un niveau maximal, suivie d'une diminution de la puissance de rayonnement de manière correspondante par rapport à la lumière ambiante.

15. Procédé selon l'une des revendications 12 à 14, **caractérisé par** le réglage d'un niveau d'atténuation sur le module de commande et de surveillance (3) dans le cas de l'alimentation en tension de secours (6).

16. Procédé selon l'une des revendications 12 à 15, **caractérisé par** le réglage d'une valeur de base de la puissance de rayonnement sur le luminaire d'indications de secours (1).

17. Procédé selon l'une des revendications 12 à 16, **caractérisé par** l'exécution d'un test de fonctionnement du luminaire d'indications de secours (1), par mesure des luminosités pour un luminaire d'indications de secours (1) en marche et à l'arrêt.

18. Procédé selon l'une des revendications précédentes 12 à 17, **caractérisé par** la réception des données d'atténuation à partir d'une commande centralisée ou d'un système de batteries centralisé ou groupé.

19. Procédé selon l'une des revendications précédentes 12 à 18, **caractérisé par** l'évaluation de la luminosité mesurée pour définir ou fixer des scénarios d'éclairage différents.

20. Procédé selon l'une des revendications précédentes 12 à 19, **caractérisé par** l'écrasement de données du capteur de lumière ambiante (7), en vue de la commande du luminaire d'indications de secours (1) dans des situations d'urgence.
